# EUROPEAN PATENT APPLICATION

(11) **EP 3 733 397 A1**
(43) Date of publication of application: **04.11.2020**
(21) Application number: 20167733.3
(22) Date of filing: 02.04.2020
(51) Int. Cl.: B32B 1/08, B32B 27/08, B32B 5/02, B32B 25/08, B32B 25/10, B32B 27/12, B32B 27/20, B32B 27/32, B32B 27/34

(54) **FLAME RESISTANT HOSE ASSEMBLY AND METHOD THEREFORE**

(30) Priority: 17.04.2019 US 201916387125
(71) Applicant: KA Group AG, 8004 Zurich (CH)
(72) Inventor: MENTINK, Laurentius Andreas Gerardus, 7483 AC Haaksbergen (NL)
(74) Representative: Uexküll & Stolberg

(57) **Abstract**

A flame resistant hose assembly is disclosed. The hose assembly includes a tubular inner layer and a flame resistant layer. The tubular inner layer has interior and exterior radial surfaces and defines a longitudinal axis. The flame resistant layer is disposed about and covers the exterior radial surface of the tubular inner layer. The flame resistant layer is formed from a flame resistant material comprising a polymeric binder and expandable flame resistant composition comprising ammonium polyphosphate. The expandable flame resistant composition is present in the flame resistant layer in an amount of from about 10 to about 60 parts by weight based on 100 parts by weight of said flame resistant material. The flame resistant layer expands when heated to a temperature of about 230°C or greater and maintains a post-expansion coverage of the exterior radial surface of the tubular inner layer of greater than about 95%.

## Description

### FIELD OF THE DISCLOSURE

The subject disclosure relates to a hose assembly of the type adapted for conveying fluids, such as fuels and oils.

### BACKGROUND OF THE DISCLOSURE

Hose assemblies for conveying fuel and other flammable fluids are well known in the art. These types of hose assemblies are exposed to a variety of fluids, such as fuel mixtures, fuel additives, and chemicals. In many applications, hose assemblies are subjected to physical stresses, such as bending, repeated movement, impact (e.g. by rocks), high internal pressures, internal pressure pulsations, and other forces. In some applications, circumstances may arise where hose assemblies are exposed to flame.

In combustion engines, hose assemblies carry flammable or even explosive fuels such as petrol, diesel, kerosene, compressed and liquefied natural gas, and liquefied petroleum gas. In motor vehicle applications, circumstances arise where hose assemblies carrying such fuels are exposed to flame. For example, the engine of an automobile may catch fire exposing hose assemblies carrying fuel to flame. In such circumstances, hose assemblies which do not exhibit adequate flame resistance can burn, lose their structural integrity, and fail. When the hose assembly fails, the consequences can be severe, flammable fluid flowing through the hose assembly (often times being pumped by a fuel pump which is still running) can be dumped or even sprayed on the flame which caused the failure "adding fuel to the fire". In such applications, flame resistant hose assemblies are required.

Flame resistant hose assemblies typically include a core tube formed from polymeric material and one or more layers disposed thereabout. Such multi-layer hoses tend to be overly bulky and lack durability. Further, some such flame resistant hoses provide some initial flame resistance, but can eventually burn, lose their structural integrity, and fail when exposed to flame. As is described above, when flame resistant hoses fail, the fluids flowing therethrough are directly exposed to the flame which caused the failure; thus, exacerbating the flame and fire.

As such, there remains an opportunity to develop a flame resistant hose assembly that is durable (e.g. physical stresses such as stone impacts) and not overly bulky, which exhibits flame resistance for longer periods of time when exposed to flame.

### SUMMARY OF THE DISCLOSURE

A flame resistant hose assembly is disclosed. The hose assembly comprises a tubular inner layer and a flame resistant layer. The tubular inner layer has an interior radial surface and an exterior radial surface and defines a longitudinal axis. The flame resistant layer is disposed about and covers the exterior radial surface of the tubular inner layer and is formed from a flame resistant material.

A method of manufacturing the flame resistant hose assembly is also disclosed. The method comprises the steps of extruding the tubular inner layer and co-extruding the flame resistant material.

The flame resistant layer is formed from a flame resistant material comprising a polymeric binder and expandable flame resistant composition comprising ammonium polyphosphate. The expandable flame resistant composition is present in the flame resistant layer in an amount of from about 10 to about 60 parts by weight based on 100 parts by weight of the flame resistant material. The flame resistant layer formed from the flame resistant material expands when heated to a temperature of about 230°C or greater and maintains a post-expansion coverage of the exterior radial surface of the tubular inner layer of greater than about 95%.

The flame resistant hose assembly and method therefore are efficient and cost-effective. When the flame resistant hose assembly is exposed to exterior flame, the flame resistant layer expands and maintains a post-expansion coverage of the exterior radial surface of the tubular inner layer which further insulates the tubular inner layer, increases the time to ignition and/or time to hose failure (i.e. burn through), reduces heat release and mass loss, and/or reduces smoke and flame spread. In other words, upon exposure to flame, expansion of the flame resistant layer is controlled such that gaps and/or holes are not formed in the flame resistant layer and, thus, protection of the tubular inner layer is maintained. The flame resistant layer also functions as a protective cover which offers mechanical protection against sharp edges, wear, impact, and other physical forces.

### BRIEF DESCRIPTION OF THE DRAWINGS

Advantages of the present disclosure will be readily appreciated as the same becomes better understood by reference to the following detailed description when considered in connection with the accompanying drawings.
Figure 1 is a cross-sectional view of an embodiment of the hose assembly comprising a tubular inner layer and a flame resistant layer.
Figure 2 is a partial cross-sectional perspective view of an embodiment of the hose assembly of Figure 1 which has not been exposed to flame.
Figure 3 is a partial cross-sectional perspective view of an embodiment of the hose assembly of Figure 2 which has been exposed to flame.
Figure 4 is a partial cross-sectional perspective view of an embodiment of the hose assembly comprising a tubular inner layer, a first flame resistant layer, and a second flame resistant layer.
Figure 5 is a cross-sectional view of an embodiment of the hose assembly comprising a tubular inner layer, a reinforcing layer, and a flame resistant layer.
Figure 6 is a partial cross-sectional perspective view of the hose assembly of Figure 5.
Figure 7 is a cross-sectional view of the hose assembly comprising a tubular inner layer, a flame resistant layer, and a reinforcing layer.
Figure 8 is a partial cross-sectional perspective view of the hose assembly of Figure 7.
Figure 9 is a cross-sectional view of an embodiment of the hose assembly comprising a tubular inner layer, a first binder layer, an anti-permeation layer, a second binder layer, a protective layer, and a flame resistant layer.
Figure 10 is a side view of a coupling having a fir-tree insert which is coupled to a hose assembly with the hose assembly comprising a tubular inner layer and a flame resistant layer (e.g. the hose assembly of Figures 1 and 2) and shown in cross-section.
Figure 11 is a side view of a coupling having a barbed insert which is coupled to a hose assembly via skiving and crimping, the hose assembly comprising a tubular inner layer, a reinforcing layer, a binder layer, and a flame resistant layer and shown in cross-section.
Figure 12 is a perspective view of a pre-formed hose assembly comprising a tubular inner layer and a flame resistant layer (e.g. the hose assembly of Figures 1 and 2).
Figure 13 is a graphical analysis of the DIN 73379-3 flame resistance of one embodiment of the subject hose assembly relative to comparative hose assemblies.
Figure 14 is a graphical analysis of the ISO 13774:1998 flame resistance of one embodiment of the subject hose assembly relative to comparative hose assemblies.

The drawings are illustrative of the disclosure, and it is to be understood that the drawings are not necessarily to scale, and the components within each individual drawing are not necessarily to scale. To this end, the drawings are intended to be descriptive and not limiting in nature. Many modifications and variations of the drawings are possible in light of the teachings below.

### DETAILED DESCRIPTION

Referring to the Figures wherein like numerals indicate like or corresponding parts throughout the several views, a flame resistant hose assembly ("hose assembly") is shown at 10. As is described in detail below, the hose assembly 10 comprises a tubular inner layer 12 and a flame resistant layer 18. The tubular inner layer 12 has an interior radial surface 16 and an exterior radial surface 14 and defines a longitudinal axis. The flame resistant layer 18 is disposed about and covers the exterior radial surface 14 of the tubular inner layer 12. The flame resistant layer 18 expands when heated to a temperature of about 230°C or greater and maintains a post-expansion coverage of the exterior radial surface 14 of the tubular inner layer 12.

The hose assembly 10 is typically used for conveying fluids, such as fuels, chemicals, etc. The hose assembly 10 is particularly suitable for use in the transportation industry, e.g. in vehicles; however, it is to be appreciated that the hose assembly 10 is not limited to the transportation industry. For example, the hose assembly 10 can be utilized in the chemical industry, the food industry, and any other suitable industries.

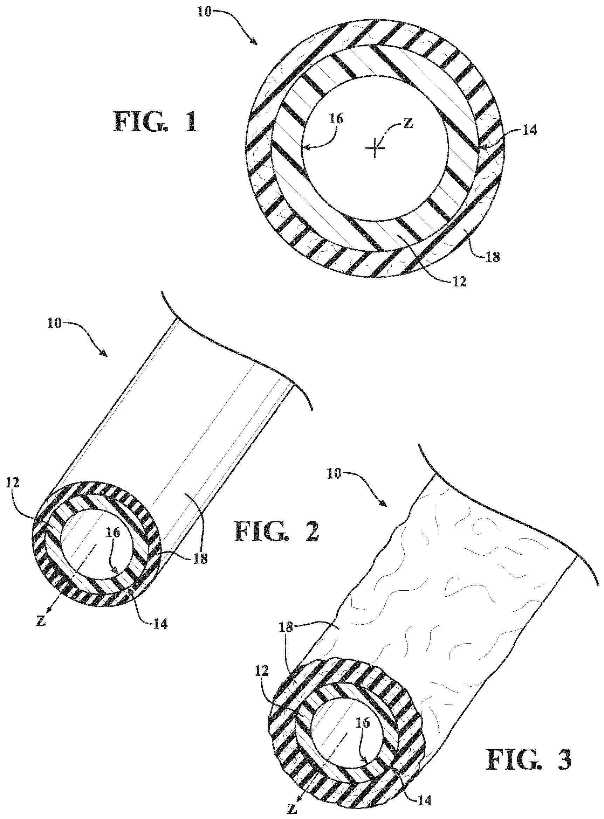

Referring to Figure 1, the hose assembly 10 includes the tubular inner layer 12 defining a tubular configuration along an axis Z. The tubular inner layer 12 is resistant to chemical and thermal degradation. The tubular inner layer 12 has the exterior radial surface 14 that can be smooth or textured. The tubular inner layer 12 has the interior radial surface 16 which is typically smooth such that minimal turbulence is created as fluid flows therethrough.

The tubular inner layer 12 is formed from a polymeric material. The tubular inner layer 12 comprises one or more layers. That is, the tubular inner layer 12 can be a monolayer tubular inner layer 12 or a multilayer tubular inner layer 12. Suitable, non-limiting examples of the polymeric material which can be used to form the one or more layers of the tubular inner layer 12 include polyethylene, polypropylene, polyvinylchloride, polyethylene terephthalate ("PET"), polybutylene terephthalate ("PBT"), polyamides, fluoropolymers, or copolymers thereof. The tubular inner layer 12 can be formed with rubber, e.g. AEM hose. Suitable, non-limiting examples of particular polyamides include PA11, PA12, PA610, PA612, PA1010, PA6, PA66, PA1110T, PA1212T, and combinations thereof. Suitable, non-limiting examples of particular fluoropolymers include polytetrafluoroethylene ("PTFE"), Fluorinated Ethylene Propylene ("FEP"), Perfluoroalkoxy ("PFA"), and ethylenetetrafluoroethylene ("ETFE").

In a preferred embodiment, the tubular inner layer 12 comprises polyamide. In many embodiments, the tubular inner layer 12 comprising polyamide exhibits excellent performance properties when exposed to fluid and ambient temperatures as high as 125°C.

In another preferred embodiment, the tubular inner layer 12 comprises a fluoropolymer such as PTFE. In many embodiments, the tubular inner layer 12 comprising fluoropolymer exhibits excellent performance properties when exposed to aggressive/corrosive fuels (e.g. biofuels such as soy methyl ester ("SME") fuel, or SME-diesel fuel blends) and fluid and ambient temperatures as high as 125°C.

In various embodiments, the tubular inner layer 12 is a multilayer tubular inner layer 12 wherein the layers (or sub layers) comprise different materials and, thus, provide advantages associated with the different materials. For example, the multilayer tubular inner layer 12 can comprise an inner layer which is thermally stable and an outer layer which softens during formation of the hose assembly 10 so that an adjacent layer (e.g. the flame resistant layer 18) can embed in the outer layer to provided excellent adhesion with the tubular inner layer 12. As another example, the multilayer tubular inner layer 12 may include an inner layer comprising fluorocarbon polymer that defines the interior radial surface 16 which is resistant to chemical and thermal degradation due to the fluid which flows through the tubular inner layer 12 and an outer layer comprising polyamide that defines the exterior radial surface 14 which is durable and provides excellent high temperature resistance. As yet another example, the multilayer tubular inner layer 12 may include an inner layer comprising fluorocarbon polymer that defines the interior radial surface 16 which is resistant to chemical and thermal degradation due to the fluid which flows through the tubular inner layer 12, another layer that is impermeable and reduces evaporation of the fluid which flows through the tubular inner layer 12, and an outer layer comprising polyamide that defines the exterior radial surface 14 which is durable and provides excellent high temperature resistance.

In some embodiments, one or more of the surfaces defined by the various layers of the hose assembly 10 may be surface treated. Surface treatment on the exterior radial surface 14 of the tubular inner layer 12 can improve adhesion of an adjacent layer thereto. Suitable surface treatments include, but are not limited to, a coupling agent, a primer, and/or various other surface treatments such as physical, chemical, plasma, or corona etching. If applied, the surface treatment is typically applied to the exterior radial surface 14 of the tubular inner layer 12 to facilitate bonding of materials (e.g. a flame resistant material) thereto.

In various embodiments, the tubular inner layer 12 is electrically conductive. The tubular inner layer 12 can also include an integral conductor along a length of the tubular inner layer 12 for preventing buildup of electrical charge. As fluid flows through the tubular inner layer 12, electrical charges tend to build up throughout the length of the tubular inner layer 12. In order to prevent these electrical charges from accumulating, in various embodiments, the tubular inner layer 12 has the integral conductor which functions as an integral longitudinal conductive means coextensive with the length of the tubular inner layer 12 for conducting an electrical charge. In one specific embodiment, the integral conductor is a conductive strip of carbon black, e.g. the tubular inner layer 12 has a conductive strip of carbon black. Carbon black is electrically conductive and will dissipate any electrical charges built up by the fluid. This is done by using carbon black about the tubular inner layer 12. It should be appreciated that other conductive material may be used to form the integral conductor.

In one specific embodiment, the tubular inner layer 12 comprises PTFE formed from an inner material (e.g. conductive PTFE) and an outer material (e.g. non-conductive PTFE) and, thus, the interior radial surface 16 of the tubular inner layer 12 is conductive. Alternatively, the entire tubular inner layer 12 can comprise the conductive means, e.g. can be formed from conductive PTFE. Alternatively, the tubular inner layer 12 can comprise a conductive inner layer and a non-conductive outer layer, each layer comprising the same or different polymers.

Still referring to Figure 1, the hose assembly 10 further includes the flame resistant layer 18 for increasing the flammability resistance of the hose assembly 10. The flame resistant layer 18 is disposed about the exterior radial surface 14 of the tubular inner layer 12 and formed from a flame resistant material.

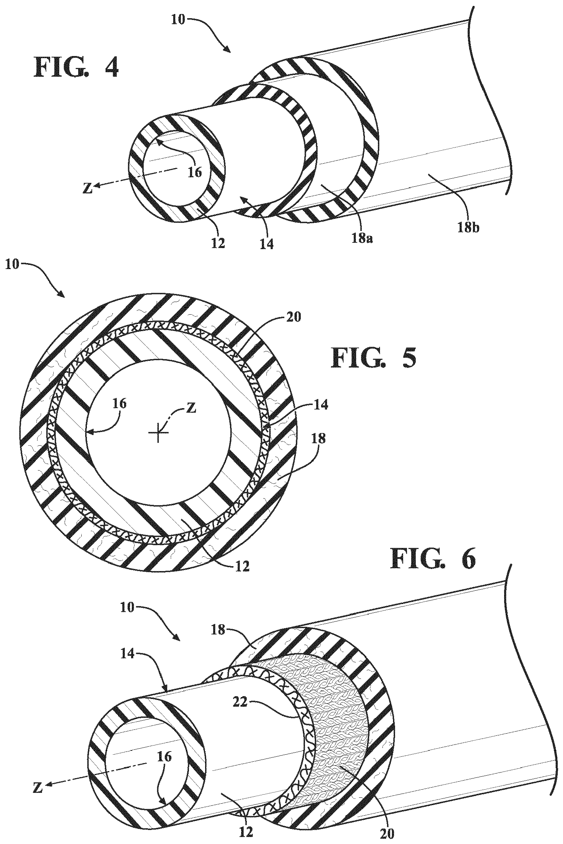

In describing the flame resistant layer 18 as disposed about the exterior radial surface 14 of the tubular inner layer 12, it should be understood that there may be one or more intermediate layers disposed between the tubular inner layer 12 and the flame resistant layer 18. In such embodiments, the flame resistant layer 18 is disposed about the exterior radial surface 14 of the tubular inner layer 12 with one or more intermediate layers disposed therebetween. For example, referring now to the hose assembly 10 of Figures 5 and 6, the embodiment shown includes the tubular inner layer 12, a reinforcing layer 20 disposed about the tubular inner layer 12, and the flame resistant layer 18 disposed about the reinforcing layer 20. Alternatively, it should also be understood that there may be additional layers disposed about the exterior radial surface 14 of the flame resistant layer 18. Of course, the hose assembly 10 can include one or more flame resistant layers 18.

Referring now to the polymeric binder, the polymeric binder can comprise one or more polymers. Suitable polymers for purposes of the subject disclosure include various extrudable polymers known in the art. Suitable, non-limiting examples of polymers which can be included in the flame resistant material include elastomers, thermoplastics, and various combinations thereof (e.g. thermoplastic elastomers). Suitable, non-limiting examples of polymers include polyethylene, polypropylene, polyvinylchloride, polyethylene terephthalate (PET), polybutylene terephthalate (PBT), polyamides, fluoropolymers, or copolymers thereof. Suitable, non-limiting examples of particular polyamides include PA11, PA12, PA610, PA612, PA1010, PA6, PA66, PA1110T, PA1212T, and blends thereof. Suitable, non-limiting examples of particular fluoropolymers include polytetrafluoroethylene (PTFE), Fluorinated Ethylene Propylene (FEP), Perfluoroalkoxy (PFA), and ethylenetetrafluoroethylene (ETFE). Suitable, non-limiting examples of thermoplastic elastomers include polymers formed from thermoplastic materials (e.g. PP, PBT or PA) and elastomers. Specifically, suitable, non-limiting examples of thermoplastic elastomers include TPE-O (thermoplastic olefins, hard/soft blends), TPE-S (styrenics such as SBS, SEBS, and SEPS), TPE-V (vulcanized PP/EPDM compounds), TPE-E (copolyester compounds), TPE-U (thermoplastic polyurethanes), and TPE-A (thermoplastic polyamides). In some embodiments, the flame resistant material further comprises silicone.

In some preferred embodiments, the polymeric binder comprises a rubber and a thermoplastic. In such embodiments, the flame resistant material can be described as a thermoplastic elastomer or as a thermoplastic vulcanizate ("TPV"). For example, in some such preferred embodiments, the polymeric binder comprises EPDM and polypropylene.

In some embodiments, the polymeric binder comprises or consists essentially of a TPV, the TPV can include of from about 10 to about 70, alternatively from about 20 to about 60, alternatively from about 30 to about 50, parts by weight thermoplastic (e.g. polypropylene), based on 100 parts by weight of the TPV. In embodiments where the polymeric binder comprises or consists essentially of a TPV, the TPV can include of from about 30 to about 90, alternatively from about 40 to about 80, alternatively from about 30 to about 70, parts by weight elastomer (e.g. EPDM), based on 100 parts by weight of the TPV. In typical embodiments, the TPV is a composition which includes thermoplastic, elastomer, and additives (plasticizers, fillers, colorants, heat stabilizers, etc.) in an amount of from about 1 to about 35 parts by weight, based on 100 parts by weight of the TPV. Exemplary TPV's are commercially available from ExxonMobile under the tradename Santoprene™, with one particular non-limiting example being Santoprene™ TPV 101-80. The polymeric binder typically has a softening point which is less than the temperature at which the ammonium polyphosphate, which is described in detail below, starts expanding. For example, the polymeric binder typically has a melting temperature of less than about 190, alternatively less than about 200, alternatively less than about 210, alternatively less than about 220, alternatively less than about 230, alternatively less than about 240, alternatively less than about 250, alternatively less than about 260, alternatively less than about 270, alternatively less than about 280, alternatively less than about 290, alternatively less than about 300, alternatively less than about 310, alternatively less than about 320, alternatively less than about 330, alternatively less than about 340, alternatively less than about 350, °C. The flame resistant material may be designed such that the melting point of the polymeric binder is below the onset (or activation) temperature of the ammonium polyphosphate, and during compounding and/or extrusion processing temperatures can be adjusted to avoid premature activation of the ammonium polyphosphate.

In various embodiments, the flame resistant material includes the polymeric binder in an amount of from about 10 to about 95, alternatively from about 45 to about 90, alternatively from about 60 to about 90, alternatively from about 65 to about 85, parts by weight based on 100 parts by weight of the flame resistant material.

The flame resistant material also includes the expandable flame resistant composition. In turn, the expandable flame resistant composition includes ammonium polyphosphate. Ammonium polyphosphate is an inorganic salt of polyphosphoric acid and ammonia. Generally, ammonium polyphosphate has the formula: [NH₄PO₃]ₙ and the following structure:

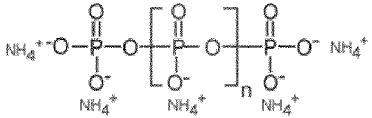

In some embodiments, one of the NH₄⁺ end groups on the formula above can be replaced with an H group.

In some embodiments, the ammonium polyphosphate has a degree of polymerization of from about 25 to about 10,000, from about 25 to about 5,000, or from about 25 to about 2,500, units. Degree of polymerization as used herein is defined under IUPAC as the average number of monomeric units in a macromolecule, an oligomer molecule, a block, or a chain. The ammonium polyphosphate can be linear or branched. Linear ammonium polyphosphate with a lower degree of polymerization (e.g. n < 100) is less thermally stable and more sensitive to water (hydrolysis) while branched ammonium polyphosphate with a higher degree of polymerization (e.g. n > 1,000) is more thermally stable and less sensitive to water (e.g. have a water solubility of < about 0.1 g/ 100 ml). Generally, branched ammonium polyphosphate has the following structure:

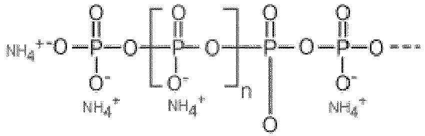

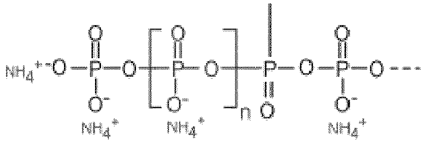

Ammonium polyphosphate can be classified via crystal phases I-VI which are characterized by certain criteria, e.g. synthesis method, structural attributes, crystallinity, solubility, etc. Crystal phase I and crystal phase II ammonium polyphosphate are the most commonly available crystal phases. Crystal phase I ammonium polyphosphate can be characterized by a linear structure of variable chain length with a variable degree of polymerization which is generally under 100, and typically has a lower decomposition temperature (e.g. 150°C) and a higher water solubility than crystal phase II ammonium polyphosphate. In one embodiment, the ammonium polyphosphate is crystal phase II ammonium polyphosphate. Crystal phase II ammonium polyphosphate can be characterized by a branched structure of variable chain length with a variable degree of polymerization which is generally over 1,000, and typically has a higher decomposition temperature (e.g. 300°C) and a lower water solubility than crystal phase I ammonium polyphosphate. In another embodiment, the ammonium polyphosphate is a crystalline form V ammonium polyphosphate.

Upon exposure to flame and/or heat, the ammonium polyphosphate decomposes to form ammonia and phosphoric acid and with the other components of the flame resistant material to form a char layer. More specifically, when polymers, e.g. TPV's, comprising ammonium polyphosphate are exposed to flame or excessive heat, the ammonium polyphosphate starts to decompose into polymeric phosphoric acid and ammonia. The polyphosphoric acid reacts with hydroxyl or other groups of a synergist (e.g. included in expandable flame resistant composition) or a polymer (e.g. included in the binder) to form an unstable phosphate ester. Dehydration of the phosphate ester follows decomposition, and a carbon foam (char layer) is built up on the surface exposed to the heat source. The char layer acts as a barrier and as an insulation layer, preventing further decomposition of the flame resistant material and helps maintain the integrity of the hose assembly 10.

As alluded to above, the addition of synergistic additives like pentaerythritol derivatives, carbohydrates, and spumific agents (melamine etc.) can improve the flame resistance/retardance of the flame resistant material. Such synergistic additives can be included in the expandable flame resistant composition, in the binder, or generally into the flame resistant material during compounding.

In some embodiments, the flame resistant material further comprises a carbohydrate and/or a polyhydric alcohol. Of course, the expandable flame resistant composition, which is typically compounded with the binder to form the flame resistant material, can comprise the carbohydrate and/or the polyhydric alcohol.

Suitable, non-limiting examples of polyhydric alcohols include, ethylene glycol (2-carbon), glycerol (3-carbon), erythritol (4-carbon), threitol (4-carbon), arabitol (5-carbon), xylitol (5-carbon), ribitol (5-carbon), mannitol (6-carbon), sorbitol (6-carbon), galactitol (6-carbon), fucitol (6-carbon), iditol (6-carbon), inositol (6-carbon; a cyclic sugar alcohol), volemitol (7-carbon), isomalt (12-carbon), maltitol (12-carbon), lactitol (12-carbon), maltotriitol (18-carbon), maltotetraitol (24-carbon), and polyglycitol. In some embodiments, the expandable flame resistant composition further comprises a polyhydric alcohol selected from pentaerythritol, xylitol, and mannitol.

In some embodiments, the expandable flame resistant composition further comprises melamine or derivatives thereof. Further, in various embodiments the expandable flame resistant composition may further comprise melamine alumina trihydrate (ATH).

The ammonium polyphosphate of the subject disclosure typically starts expanding (e.g. has an onset temperature) at temperatures greater than about 150, alternatively about 180, alternatively greater than about 210, alternatively greater than about 240, alternatively greater than about 270, alternatively greater than about 300, alternatively greater than about 330, alternatively greater than about 360, °C. In various preferred embodiments, the ammonium polyphosphate has an decomposition temperature of from about 230 to about 400°C with ranges therebetween contemplated herein. The flame resistant material having the ammonium polyphosphate can be co-extruded without exhibiting premature expansion. Accordingly, the ammonium polyphosphate can be compounded with the polymeric binder to form the flame resistant material, and the flame resistant material can be co-extruded with the tubular inner layer 12 and/or other layers, e.g. the reinforcing layer 20, without premature expansion to form the hose assembly 10. The flame resistant material may be designed such that the melting point of the polymeric binder is below the onset temperature of the ammonium polyphosphate, and during compounding and/or extrusion processing temperatures can be adjusted to avoid premature activation of the ammonium polyphosphate. For example, in some embodiments, the melting temperature of the binder is about 10, 20, 30, 40, or 50, °C less than the onset temperature of the ammonium polyphosphate. Nonetheless, in some embodiments, some premature expansion or pre-expansion is desired (and pursued) during co-extrusion.

In some embodiments, the flame resistant layer 18 has a volumetric expansion of from about 25 to about 500, about 25 to about 300% when heated to a temperature of about 230°C or greater (or alternatively when heated to its onset temperature which can be between 230°C and 500°C). In additional non-limiting embodiments, all values and ranges of values within and including the aforementioned range endpoints are hereby expressly contemplated. In some examples, the flame resistant layer 18 expands to a post expansion thickness at least about 2, about 3, about 4, or about 5 times greater than its pre-expansion thickness when heated to a temperature of about 230°C or greater (or alternatively when heated to its onset temperature which can be between 230°C and 500°C). In additional non-limiting embodiments, all values and ranges of values within and including the aforementioned range endpoints are hereby expressly contemplated.

In various embodiments, the expandable flame resistant composition comprising ammonium polyphosphate is present in the flame resistant material in an amount of from about 5 to about 90, alternatively from about 10 to about 60, alternatively from about 20 to about 45, alternatively from about 20 to about 35, alternatively from about 20 to about 30, parts by weight based on 100 parts by weight of the flame resistant material. In additional non-limiting embodiments, all values and ranges of values within and including the aforementioned range endpoints are hereby expressly contemplated.

Further, in such embodiments, the ammonium polyphosphate may be present in the expandable flame resistant composition in an amount of from about 50 to about 100, alternatively from about 65 to about 100, alternatively from about 80 to about 100, alternatively from about 95 to about 100, parts by weight based on 100 parts by weight of the expandable flame resistant composition. In additional non-limiting embodiments, all values and ranges of values within and including the aforementioned range endpoints are hereby expressly contemplated.

The flame resistant material may also include expandable graphite, which can be present in the bonder in particulate, flake, and/or fiber form. The expandable graphite may be referred to in the art as expandable flake graphite, intumescent flake graphite, or expandable flake.

If included, the expandable graphite of the subject disclosure typically starts expanding (e.g. has an onset temperature) at temperatures greater than about 160, alternatively greater than about 180, alternatively greater than about 200, alternatively greater than about 210, alternatively greater than about 230, alternatively greater than about 240, alternatively greater than about 250, alternatively greater than about 260, alternatively greater than 270, °C. In various preferred embodiments, the expandable graphite has an onset temperature of from about 250 to about 400°C with ranges therebetween contemplated herein. In additional non-limiting embodiments, all values and ranges of values within and including the aforementioned range endpoints are hereby expressly contemplated.

If included, the expandable graphite has a percent volumetric expansion of from about 50 to about 500%, alternatively from about 10 to about 300%, alternatively from about 50 to about 300%, alternatively from about 100 to about 300%, at 600°C. Percent volumetric expansion can be defined as the % change volume, i.e., the final volume of a sample divided by the initial volume of the sample multiplied by 100. The sample is heated to a temperature of from about 500 to about 750°C (e.g. to about 600°C, about 700°C) to achieve the final volume of the sample. In one method, a Bunsen burner is used to heat the sample to a temperature of about 700°C to test expansion.

The flame resistant material may also include one or more additives. Suitable additives may include, but are not limited to, curatives, processing additives, adhesion promoters, anti-oxidants, ultraviolet light stabilizers, fillers, thixotropic agents, silicones, dyes/colorants, and combinations thereof. For example, in one embodiment, the flame resistant material comprises reinforcing fibers such as glass fibers, which are also flame resistant.

Referring now to the flame resistant layer 18, the flame resistant layer 18 is disposed about and covers the exterior radial surface 14 of the tubular inner layer 12. Disposed about and "covers" is defined herein as covering 100% of the exterior radial surface 14 of the tubular inner layer 12.

The flame resistant layer 18 can expand and form insulative char to further insulate the tubular inner layer 12, increase the time to ignition and/or time to hose failure, reduce heat release and mass loss, and/or reduce smoke and flame spread when the hose assembly 10 is exposed to flame and high temperatures associated with the flame.

The flame resistant layer 18 can also function as a protective cover which offers mechanical protection against sharp edges, against wear, stone impact, and other physical forces. From a problem solution perspective, the flame resistant layer 18 provides the hose assembly 10 with both durability and flame resistance. Such performance is unexpected as a special challenge was overcome to engineer a protective layer in such way that it provides both durability and flame resistance. In a typical example, the solution provided combines a thermoplastic vulcanizate (TPV) which includes EPDM in a polypropylene matrix, which has a very good durability/robustness (for example in abrasion-tests). It is surprising, that the solution disclosed herein maintains this durability/robustness (e.g. during abrasion testing, shaving, etc.) and that the additive for flame resistance (ammonium polyphosphate) does not deteriorate this durability/robustness while providing flame resistance.

The flame resistant layer 18, which comprises the polymeric binder and the ammonium polyphosphate, expands when heated to a temperature of about 230°C or greater and maintains a post-expansion coverage of the exterior radial surface 14 of the tubular inner layer 12 of greater than about 95%, alternatively about 96%, alternatively about 97%, alternatively about 98%, alternatively about 99%, alternatively about 100%. That is, the hose assembly 10 of the subject disclosure is particularly effective because when the flame resistant layer 18 is exposed to external flame and high temperatures associated with the flame, the flame resistant layer 18 does not pull off of the exterior radial surface 14 of the tubular inner layer 12, and the flame resistant layer 18 does not split or tear and expose the tubular inner layer 12 due to the expansion or "worming". In other words, the flame resistant material of the subject disclosure exhibits controlled expansion when exposed to external flame completely covering or surrounding the tubular inner layer 12. It is believed that the composition of the flame resistant material described herein is the reason that the flame resistant layer 18 maintains a post-expansion coverage of the exterior radial surface 14 of the tubular inner layer 12 and, thus, further insulates the tubular inner layer 12, increases the time to ignition and/or time to hose failure (i.e. burn through), reduces heat release and mass loss, and/or reduces smoke and flame spread when the hose assembly 10 is exposed to flame over extended periods of time. That is, when the hose assembly 10 is exposed to flame, the flame resistant layer 18 increases the time to burn through so that the time to the point where fuel conveyed by the hose is flowing into the flame is increased and the flame and fire is kept to a minimum.

In some embodiments, the flame resistant layer 18 maintains from about 95 to about 100 % coverage of the exterior radial surface 14 of the tubular inner layer 12 when exposed to flame (e.g. flame produced by the burning of nature gas) for up to 2 minutes, alternatively up to 4 minutes, alternatively up to 6 minutes, alternatively up to 8 minutes, alternatively up to 10 minutes, alternatively up to 12 minutes, alternatively up to 14 minutes, alternatively up to 16 minutes, alternatively up to 18 minutes, or even more minutes.

This post-expansion coverage of the exterior radial surface 14 by the flame resistant layer 18 is exemplified by Figures 2 and 3. Figure 2 is a partial cross-sectional perspective view of an embodiment of the hose assembly 10 comprising the tubular inner layer 12 and the flame resistant layer 18 which has not been exposed to flame and high temperature. Figure 3 is a partial cross-sectional perspective view of an embodiment of the hose assembly 10 of Figure 2 which has been exposed to flame and high temperature. As is apparent in Figure 3, the post-expansion coverage of the flame resistant layer 18 on the exterior radial surface 14 of the tubular inner layer 12 is about 100%, without tearing or release from the exterior radial surface 14 of the tubular inner layer 12.

In various embodiments, the flame resistant layer 18 has a volumetric expansion of from about 25 to about 500%, alternatively from about 50 to about 300%, alternatively from about 50 to about 200%, alternatively from about 50 to about 150%, when heated to a temperature of about 220°C or greater.

In some embodiments, the tubular inner layer 12 and the flame resistant layer 18 can be chemically bonded (e.g. crosslinked) with one another and/or mechanically bonded with one another. In still other embodiments, the tubular inner layer 12 and the flame resistant layer 18 are bonded together via an adhesive or a binder. When the flame resistant layer is chemically bonded to the tubular inner layer 12 or an intervening layer (e.g. an anti-permeation layer 24) the flame resistant layer 18 is more likely to maintain contact with and maintain coverage over the exterior radial surface 14 of the tubular inner layer 12, thereby improving the flame resistance of the hose assembly 10.

The hose assembly 10 can include one or more additional layers including, but not limited to, reinforcing layers 20, binder layers 22, anti-permeation layers 24, and protective layers 26. The type and amount of layers included in the hose assembly 10 depends on the intended use of the hose assembly 10.

Referring now to Figure 4, an embodiment of the hose assembly 10 comprising multiple layers is shown. Specifically, a partial cross-sectional perspective view of the hose assembly 10 comprising the tubular inner layer 12, a first layer, or alternatively, a flame resistant layer 18a disposed about the exterior radial surface 14 of the tubular inner layer 12, and another flame resistant layer 18b disposed about the exterior radial surface 14 of the first flame resistant layer 18a is shown. In this embodiment, the tubular inner layer 12 can comprise one or more layers. In such an embodiment, the first flame resistant layer 18a can comprise TPV and ammonium polyphosphate in an amount of from about 20 to about 40% by weight based on 100 parts by weight of the flame resistant material, and the second flame resistant layer 18b can comprise TPV and ammonium polyphosphate in an amount of from about 20 to about 40% by weight based on 100 parts by weight of the flame resistant material. In such an embodiment, the flame resistance is concentrated on the outside of the hose assembly 10.

The hose assembly 10 can include one or more reinforcing layers 20. The reinforcing layer 20 can be included between the tubular inner layer 12 and the flame resistant layer 18 and/or included outside of the flame resistant layer 18. For example, Figure 5 illustrates an embodiment of the hose assembly 10 comprising the tubular inner layer 12, the reinforcing layer 20 disposed about the exterior radial surface 14 of the tubular inner layer 12, and the flame resistant layer 18 disposed about the exterior radial surface 14 of the reinforcing layer 20. Figure 6 is a partial cross-sectional perspective view of the hose assembly 10 of Figure 5.

In an alternative embodiment, the hose assembly 10 can include the tubular inner layer 12, the flame resistant layer 18, and the reinforcing layer 20 disposed about the exterior radial surface 14 of the flame resistant layer 18. In such an embodiment, the reinforcing layer 20 further restricts the expansion of the flame resistant layer 18 when the hose assembly 10 is exposed to exterior flame and high temperature. In turn, post-expansion coverage of the exterior radial surface 14 of the tubular inner layer 12 is maintained by the flame resistant/char layer and, thus, further insulates the tubular inner layer 12, increases the time to ignition and/or time to hose failure, reduces heat release and mass loss, and/or reduces smoke and flame spread when the hose assembly 10 is exposed to exterior flame and high temperature over extended periods of time.

The reinforcing layer 20 comprises reinforcing fibers that are braided, helically wound, knitted, or wrapped about the exterior radial surface 14 of the tubular inner layer 12 (with or without the flame resistant layer 18 therebetween). The reinforcing layer 20 can comprise one or more different types of reinforcing fibers. The reinforcing fibers are typically in the form of monofilament, multifilament, or staple yarn (reinforcing yarn). The reinforcing yarn can comprise one or more types of reinforcing fibers. The reinforcing fibers typically comprise a polymer, a ceramic, a fiberglass, a metal, a mineral, or combinations thereof. In one embodiment, the reinforcing fibers comprise fiberglass. Examples of suitable glass reinforcing fibers include, but are not limited to, E-glass (alumina-calcium-borosilicate), S2 glass (magnesium-alumino-silicate), C glass (calcium borosilicate), R glass (calcium-alumino-silicate), silica, quartz, basalt yarn, and combinations thereof. Examples of other suitable fibers include, but are not limited to, basalt fiber (or yarn), ceramic fiber, aramid fiber (e.g. NOMEX® and KEVLAR® fiber), semi-aromatic aramid fiber, and combinations thereof. Of course, as is set forth above, one or more different types of reinforcing fibers can be used, i.e., blends of any of the reinforcing fibers described herein can be used. In a preferred embodiment, the reinforcing fibers comprise E-glass fiber. Reinforcing fibers comprising fiberglass provide strength to reinforce the tubular inner layer 12 and are thermally stable at elevated temperatures, which is beneficial for use in high temperature environments, e.g. under the hood of vehicles.

As is set forth above, some embodiments of the hose assembly 10 include the flame resistant layer 18 with the reinforcing layer 20 disposed about and covering the exterior radial surface 14 of the flame resistant layer 18. In such embodiments, the reinforcing layer 20 further restricts the expansion of the flame resistant layer 18 when the hose assembly 10 is exposed to exterior flame and high temperature.

In some such embodiments, the reinforcing layer 20 covers greater than about 40, alternatively greater than about 50, alternatively greater than about 60, alternatively greater than about 70, alternatively greater than about 80, alternatively greater than about 90, alternatively greater than about 95, % of the exterior radial surface 14 of the tubular inner layer 12. For example, the braided reinforcing layer 20 could cover from about 80 to about 100, alternatively from about 90 to about 100, alternatively from about 95 to about 100, alternatively about 100, % of the exterior radial surface 14 of the flame resistant layer 18. In such embodiments, the braid of the reinforcing layer 20 is closed, and would restrict or even stop expansion of the flame resistant layer 18 through the braid of the reinforcing layer 20 in effect squeezing the tubular inner layer 12 thereby reducing the inner diameter of the tubular inner layer 12 and closing hose thereby stopping all fluid to flow out. That is, upon exposure to flame, this embodiment can restrict or even close the inner-diameter of the tubular inner layer 12 of the hose assembly 10 and reduce or totally stop fuel from flowing out of the hose preventing burn-through and fuel from the hose assembly 10 from flowing into the flame.

In other such embodiments, the reinforcing layer 20 covers less than about 70, alternatively less than about 60, alternatively less than about 50, alternatively less than about 40, alternatively less than about 30, alternatively less than about 20, % of the exterior radial surface 14 of the flame resistant layer 18 such that the expansion of the flame resistant layer 18 is restricted, but the flame resistant layer 18 can still partially expand through the reinforcing layer 20. For example, the braided reinforcing layer 20 could cover from about 10 to about 70, alternatively from about 20 to about 50, alternatively from about 20 to about 40, alternatively from about 1 to about 15, alternatively from about 2 to about 10, % of the exterior radial surface 14 of the flame resistant layer 18.

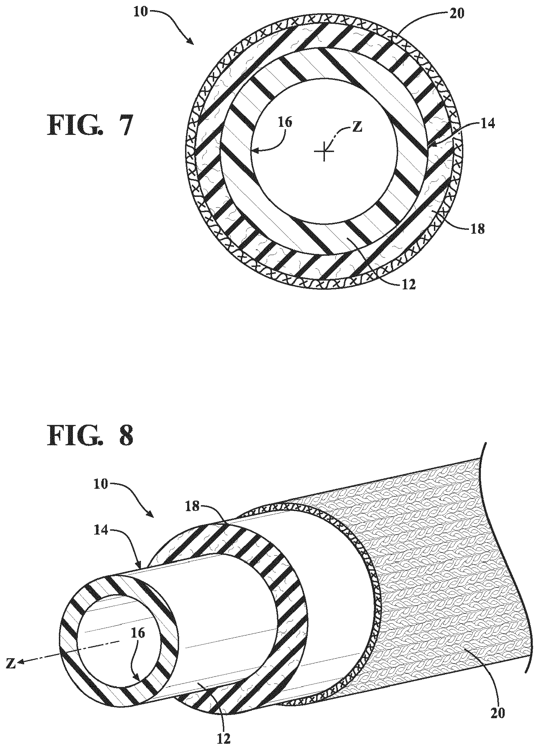

Referring now to Figure 7, an embodiment of the hose assembly 10 comprising multiple layers is shown. Specifically, a partial cross-sectional perspective view of the hose assembly 10 comprising the tubular inner layer 12, the flame resistant layer 18 disposed about the exterior radial surface 14 of the tubular inner layer 12, and the reinforcing layer 20 (with an open braid) disposed about the exterior radial surface 14 of the flame resistant layer 18 but not covering the entire exterior radial surface 14 of the flame resistant layer 18 is shown. In the embodiment of Figure 7, the reinforcing layer 20 protects the flame resistant layer 18 from wear and tear and is also open so that the flame resistant layer 18 can expand through the open braids of the reinforcing layer 20 upon exposure to flame/heat. Figure 8 is a partial cross-sectional perspective view of the hose assembly 10 of Figure 7.

In some embodiments, the reinforcing fibers comprise a polymer, a ceramic, a fiberglass, a metal, or combinations thereof, which are coated with a polymeric binder. In some embodiments, the reinforcing layer 20 can comprise a polymeric binder. In a typical embodiment, the polymeric binder binds (1) the reinforcing fibers within the reinforcing layer 20 together, and (2) the strands of reinforcing yarn to the surfaces of any adjacent layers. Suitable polymeric binders can include, but are not limited to, polyethylene, polypropylene, polyvinylchloride, PET, PBT, polyamide, fluoropolymer, and copolymers thereof.

In some embodiments the polymeric binder is coated on the reinforcing fibers. In other embodiments, the binder is applied in an emulsion, e.g., the hose assembly 10 including the tubular inner layer 12 and the flame resistant layer 18 having the reinforcing layer 20 thereon is dipped in an emulsion comprising a polymeric material and then heated to form the reinforcing layer 20.

In some embodiments, the binder is formed from binding fibers. The use of binding fiber is described in WO/2014/078661 and WO/2014/078680, the entirety of which is incorporated by reference herein. That is, in some embodiments, the reinforcing layer 20 is formed from binding fibers. If binder fibers are used to form the reinforcing layer 20, the reinforcing layer 20 can be formed from one or more different types of binding fibers. The binding fibers are typically in the form of monofilament strands or multifilament yarn. Examples of polymers suitable for the binding fibers include, but are not limited to, polyethylene, polypropylene, polyvinylchloride, PET, PBT, polyamide, fluoropolymer, and copolymers thereof.

If binding fibers are used to make the reinforcing layer 20, different types of binding fibers can be used. For example, if used, the binding fibers can include binding fibers comprising different polymers or having different diameters. To this end, the reinforcing layer 20 can be formed with varying amounts and different types of binding fibers. For example, the binding fibers can include binding fibers comprising different polymers or having different diameters.

As alluded to above, the hose assembly 10 can include one or more binder layers 22. The binder layer 22 is formed from the polymeric binder described above which typically comprises a polymer or blend of polymers and other additives. The binder layer 22 provides strength and durability to the hose assembly 10 and facilitates bonding between different layers comprising materials which may not adhere well to one another.

As one example of a protective layer 26, the hose assembly 10 can include a silicone layer (e.g. a silicone layer or jacket). As another example, the hose assembly 10 can include a TPV layer (e.g. a TPV layer or jacket). As yet another example, the hose assembly 10 can include a polyamide layer (e.g. a polyamide layer or jacket).

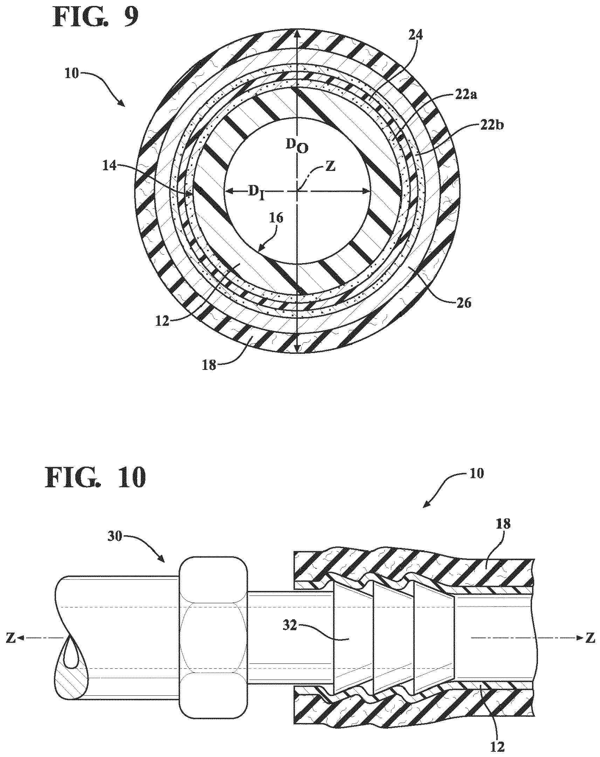

One example of a multi-layer tube is Figure 9. Figure 9 is a cross-sectional view of an embodiment of the hose assembly 10 comprising the tubular inner layer 12, a first binder layer 22, the anti-permeation layer 24, a second binder layer 22, a protective layer 26, and the flame resistant layer 18. The hose assembly 10 has an inner diameter (D_{I}), an outer diameter (D_{O}), and a length (L). The inner diameter, the outer diameter, and the length of the hose assembly 10 can vary depending on the intended use of the hose assembly 10. For example, the hose assembly 10 can have an inner diameter of two inches for use in applications that require transfer of greater volumes of fluid or an inner diameter of a half of an inch for use in applications that require transfer of lesser volumes of fluid.

Still referring to Figure 9, an embodiment of the hose assembly 10 comprising multiple layers is shown. The hose assembly 10 of Figure 9 includes six distinct layers. Specifically, the hose assembly 10 of Figure 9 is designed for fuel applications, e.g. conveying fuels such as gasoline, ethanol, ethanol/gasoline mixtures, diesel, and biodiesel. The hose assembly 10 of Figure 9 has an internal diameter D_{I} of about 6 mm and an outer diameter D_{O} of about 11 mm. In Figure 9 an outer diameter of the tubular inner layer 12 is about 9 mm.

Still referring to Figure 9, the tubular inner layer 12 (first layer) comprises ETFE. The ETFE of this embodiment is resistant to physical or chemical degradation, even upon exposure to aggressive fuels such as biodiesel, and, thus, imparts fuel resistance properties on the tubular inner layer 12 and the hose assembly 10 formed therefrom. The ETFE of this embodiment is also conductive. That is, the ETFE is compounded with, for example, carbon-black, to impart conductive properties on the tubular inner layer 12 formed therefrom. The tubular inner layer 12 having conductivity is often preferred for fuel applications because a conductive tubular inner layer 12 provides anti-static properties and, thus, allows for the electrical discharge of static buildup which can be caused by the flowing of fuel through the tubular inner layer 12. In one embodiment, the tubular inner layer 12 has a thickness of about 0.1 mm.

Still referring to Figure 9, a first binder layer 22a (second layer) comprises polyamide (a polyamide binder). The first binder layer 22a provides the hose assembly 10 with mechanical strength and also provides a robust bond between the tubular inner layer 12 which comprises ETFE and the anti-permeation layer 24 (third layer) which comprises ethylene vinyl alcohol (EVOH). EVOH is a copolymer of ethylene and vinyl alcohol which imparts low permeability on the hose assembly 10 formed therefrom. ETFE and EVOH do not readily bond with one another. In one embodiment, the first binder layer 22a has a thickness of about 0.3 mm and the anti-permeation layer 24 has a thickness of about 0.1 mm.

Still referring to Figure 9, a second binder layer 22b (fourth layer) comprises a binder comprising a polyamide. The polyamide binder provides the hose assembly 10 with thermal resistance and mechanical strength and also provides a robust bond between the anti-permeation layer 24 (third layer) comprising EVOH and protective layer 26 (fifth layer) comprising polyamide which is included to impart strength, durability, and burst resistance to the hose assembly 10. In one embodiment, the second binder layer 22b has a thickness of about 0.3 mm and the protective layer 26 has a thickness of about 0.4 mm.

Still referring to Figure 9, the flame resistant layer 18 (sixth layer) is included as an outermost layer. The flame resistant layer 18 of this embodiment comprises a polymeric binder comprising TPV and ammonium polyphosphate. The TPV provides durability while the ammonium polyphosphate provides flame resistance. In one embodiment, the flame resistant layer 18 has a thickness of about 1.5 mm.

In an embodiment such as that of Figure 9, an 8x1 hose assembly 10 could have a typical layer thickness of about 1.5 mm, which would result in an inner diameter D_{I} of about 6 mm and an outer diameter D_{O} of about 11 mm. That said, the layers described above can be thinner or thicker than described above depending on the application or depending on the properties desired.

In another multilayer embodiment, the hose assembly 10 comprises the tubular inner layer 12, the reinforcing layer 20 comprising glass and/or polyamide fiber disposed about the exterior radial surface 14 of the tubular inner layer 12, the binder layer 22 formed via impregnation with a PTFE emulsion disposed within the voids in the reinforcing layer 20, and the flame resistant layer 18 comprising TPV and ammonium polyphosphate disposed about the exterior radial surface 14 of the reinforcing/binder layers 20, 22.

The hose assembly 10 can further include a coupling 30. Typically the coupling 30 is adapted to engage at least one end of the hose assembly 10 for interconnecting the hose assembly 10 to a fluid source, such as a fuel tank. It is to be appreciated that any suitable coupling 30 can be used with the hose assembly 10. For example, the coupling 30 including a threaded insert, a fir-tree insert 32, or a crimped insert can be employed to couple the hose assembly 10 to the fluid source.

For example, the coupling 30 comprising the fir-tree insert 32 that goes inside the hose assembly 10 can be used to couple the hose assembly 10 to a fluid source. The fir-tree insert 32 may be beneficial because the insert-area is also protected from fire by the flame resistant material around it. Referring now to Figure 10, a side view of the coupling 30 having the fir-tree insert 32 which is coupled to the hose assembly 10 with the hose assembly 10 comprising the tubular inner layer 12 and the flame resistant layer 18 and shown in cross-section is illustrated. Still referring to Figure 10, as one non-limiting example, the coupling 30 can comprise metal, the hose assembly 10 can comprise the tubular inner layer 12 comprising polyamide as well as the flame resistant layer 18 comprising TPV and ammonium polyphosphate. The area where the fir-tree insert 32 is located is also protected by the flame resistant layer 18 which imparts additional flame resistance to the coupling 30. Normally the coupling 30 can be a weak-point with respect to fire-resistance because the hose can melt and lose connection, so the extra flame resistance offered by the flame resistant layer 18 is beneficial.

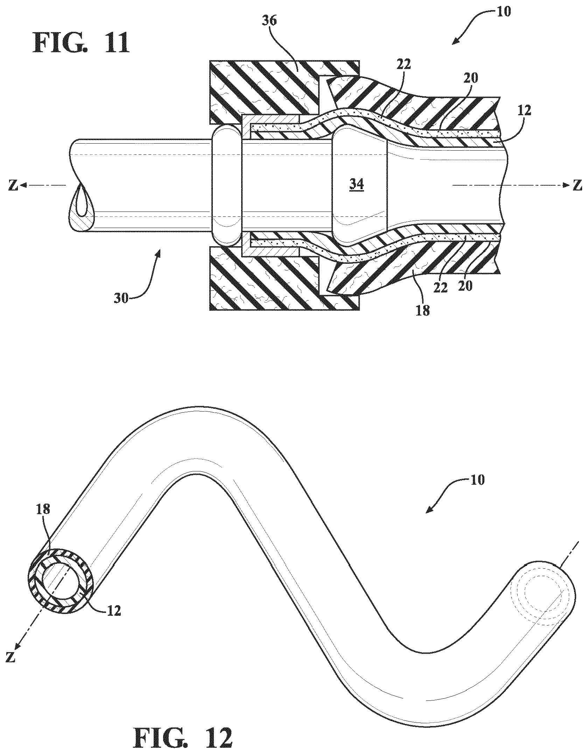

As another example, the hose assembly 10 can be crimped to form a hose joint and partly remove the flame resistant layer 18 (skive the hose assembly 10) in the crimped area. Referring now to Figure 11, a side view of the coupling 30 having a barbed insert 34 which is coupled to the hose assembly 10 with the hose assembly 10 comprising the tubular inner layer 12, the reinforcing layer 20, the binder layer 22 (wherein the binder layer 22 is disposed throughout the reinforcing layer 20) and the flame resistant layer 18 and shown in cross-section is illustrated. In such an embodiment, the tubular inner layer 12 can comprise polyamide, the reinforcing layer 20 can comprise glass and/or polyamide fiber, and the flame resistant layer 18 comprising TPV and ammonium polyphosphate. In Figure 10, the hose assembly 10 is coupled to a size 8x1 mm metallic (e.g. steel) pipe on the coupling 30, which has the barbed insert 34 consisting of a cold-formed end form comprising a barb (nose-beat) on the very front and a stop-beat about 20 mm from the end of the metallic pipe. In such an embodiment, the hose assembly 10 can be pushed along the Z axis onto the end-form and then crimped onto the coupling 30 (or onto the end of the metallic tubular pipe) by means of a crimping-ferrule. Notably, the flame resistant layer 18 does not cover the entire length of the coupling 30, but is skived. As such, an additional cover or sleeve 36 comprising TPV and ammonium polyphosphate (just as described above with respect to the flame resistant layer 18) is employed. This sleeve 36 imparts flame resistance to the portion of the hose assembly 10 where the TPV was skived. Of course, the sleeve 36 can be made from flame resistant materials with ammonium polyphosphate or flame resistant materials without ammonium polyphosphate and can be injection-molded or extruded. In contrast, if the hose assembly 10 is skived, there is no protection in that area, so the connector-area might need additional flame protection.

A method of forming the flame resistant hose assembly 10 is also disclosed herein. The method comprises the steps of extruding the tubular inner layer 12 and co-extruding the flame resistant material, at a temperature of less than about 230°C to form the flame resistant layer 18. Various embodiments of the method include coextruding the various layers described in the different configurations of the flame resistant flame resistant hoses assembly described above. In some embodiments, the step of co-extruding the flame resistant material is further defined a co-extruding the flame resistant material at a temperature of from about 180 to about 250°C.

In some embodiments, e.g. the embodiment of Figure 1, the tubular inner layer 12 and the flame resistant layer 18 can be coextruded. Such embodiments can provide a compact design having a small outside-diameter and very effective flame resistance.

Embodiments in which the flame resistant material including the ammonium polyphosphate is partially expanded during coextrusion, e.g. volumetrically expanded by about 1, 5, 10, 20, 30, 40, 50, 60, 70, 80%, alternatively from about 1 to about 80%, alternatively from about 1 to about 60%, alternatively from about 1 to about 40%, alternatively from about 1 to about 20% are also contemplated herein. In such embodiments, the flame resistant layer 18 can be referred to as partially expanded. In such embodiments, the char from the partially expanded ammonium polyphosphate functions as a flame resistant armor embedded in the flame resistant layer 18.

As set forth above, the method includes the step of extruding the tubular inner layer 12. The tubular inner layer 12 is just as described above. The tubular inner layer 12 is extruded to the desired dimensions using melt, paste, or any other extrusion technique known in the art. Of course, in various embodiments, the tubular inner layer 12 is a multilayer tubular inner layer 12 which can be formed with techniques known in the art, such as co-extrusion techniques. In other embodiments, the tubular inner layer 12 is a monolayer tubular inner layer 12 formed via a paste extrusion.

In various embodiments known in the art, a first dip in the binder or an adhesion promoter can be used to improve the adhesion between the layers of the hose assembly 10. The method disclosed herein can employ such a dip. Alternatively, the method can be free of this first dip step. The method can also include the step of forming the reinforcing layer 20 from the reinforcing fibers. The reinforcing layer 20 can comprise various configurations of the reinforcing fiber and binder.

The method optionally includes the step of heating the hose assembly 10 to melt the binder. If heated, the hose assembly 10 is typically heated to a temperature of greater than about 100, alternatively greater than about 150, alternatively greater than about 200, alternatively greater than about 250, alternatively greater than about 300, °C.

After the step of heating, the hose assembly 10 is optionally cooled to control physical properties of the tubular inner layer 12 and to maintain the inner diameter and the outer diameter of the tubular inner layer 12.

The method optionally includes the step of pressurizing an interior cavity of the tubular inner layer 12 with a fluid such as water, an inert gas (e.g. nitrogen), or air, through an inlet and an outlet (each end of the reinforced tubular inner layer 12) during the step of heating the reinforced tubular inner layer 12. The cavity of the reinforced tubular inner layer 12 is typically pressurized to a pressure of up to about 500 (3447), alternatively from about 5 to about 100 (34.5 to 689.5), alternatively from about 10 to about 75 (68.9 to 517.1), alternatively from about 20 to about 60 (137.9 to 413.7), PSI (kPa). The step of pressurizing the reinforced tubular inner layer 12 maintains the dimensional integrity of the tubular inner layer 12 during manufacturing and also facilitates adhesion of the layers of the hose assembly 10.

Once formed, the hose assembly 10 can be pre-formed (thermally or otherwise) into a finished shape. For example, the hose assembly 10 can be heated (locally with a heat-source or in an oven) and shaped as desired and then (in air or water) set in the desired shape. Once pre-formed, there is minimal stress in the hose assembly 10, and the hose assembly 10 is resilient and does not change its formed shape over time. Referring now to Figure 12, a pre-formed hose assembly 10 is shown. In this non-limiting example, the hose assembly 10 comprises a tubular inner layer 12 and the flame resistant layer 18. Couplings 30 can be attached before or after the pre-forming. When pre-forming by means of heating the entire hose, couplings 30 are typically connected afterwards. If heating is done only in the area to be bent, then couplings 30 can be pre-mounted.

The step of pre-forming the hose assembly 10 can be conducted at a temperature below which the ammonium polyphosphate in the flame resistant material of the flame resistant layer 18 expands. Of course, it is also contemplated that the step of pre-forming the hose assembly 10 can be conducted at a temperature to purposely obtain some pre-decomposition of the ammonium polyphosphate.

In one embodiment, the tubular inner layer 12 is extruded and additional layers are added. The hose assembly 10 is then pre-formed into a desired shape and then the flame resistant layer 18 is applied to the hose assembly 10.

The following examples are intended to illustrate the present disclosure and are not to be viewed in any way as limiting to the scope of the present disclosure.

### EXAMPLES

Example 1 and Comparative Examples 1-7 are described herein. Example 1 is a hose assembly formed in accordance with the subject disclosure, while Comparative Examples 1-7 are hose assemblies not formed in accordance with the subject disclosure.

To make the hose assembly of Example 1, a tubular inner layer comprising nylon 11 and having an interior radial surface, an exterior radial surface, and a thickness of 1.5 mm is co-extruded with a flame resistant layer. The flame resistant layer, which is disposed about the exterior radial surface of the tubular inner layer and has a thickness of 2.0 mm, comprises a flame resistant material. The flame resistant material includes a polymeric binder comprising a thermoplastic vulcanizate and a flame resistant composition comprising ammonium polyphosphate. The flame resistant composition is included in the flame resistant material in an amount of 40 parts by weight based on 100 parts by weight of the flame resistant material. A description of Example 1 and Comparative Examples 1-7 along with flame resistance testing data is set forth in Table 1 below.

**TABLE 1**

| | **Tubular Inner Layer (Core Tube)** | **Flame Resistant Layer** | **Flame Test DIN 73379-3 (time to failure in seconds)** | **Flammability Test ISO 13774:1998 (time to failure in seconds)** |
|---|---|---|---|---|
| Comparative Example 1 | Nylon 11 (1.5 mm) | Flame Retardant TPV (2.0 Santoprene™ 251-80W232 | 369.6 | --- |
| Comparative Example 2 | Nylon 11 (1.5 mm) | Standard TPV (2.0 mm) Santoprene™ 101-80 | 257.8 | 71.7 |
| Comparative Example 3 | Nylon 11 (1.5 mm) | TPV + 37 PBW Expandable Graphite (2.0 mm) | 571.3 | 73.0 |
| Comparative Example 4 | Nylon 11 (1.5 mm) | TPV + 50 PBW Expandable Graphite (2.0 mm) | 1529.3 | 90.3 |
| Example 1 | Nylon 11 (1.5 mm) | Standard TPV + 40 PBW APP Comp. | 1800 +* | 90.4 |
| Comparative Example 5 | Nylon 11 (1.5 mm) | Standard TPV + Flame Resistant Coating (2.0 mm) | 1221.7 | 113.0 |
| Comparative Example 6 | Nylon 11 (1.5 mm) | Fluoropolymer (3.0 mm) | 570 | 79.3 |
| Comparative Example 7 | Nylon 11 (1.5 mm) | Fluoropolymer (3.0 mm) + 2 reinforcing layers (3.0 mm) | 1800 +* | --- |

| | | | | |
|---|---|---|---|---|
| *Test stopped at 1800 seconds because 1800 seconds (30 minutes) is an upper target, and the example unexpectedly exceeded this upper target. Surprisingly, the hose assemble of Example 1 reached the upper target and matched or even exceeded the flame resistance of the next level comparative hose assembly of Comparative Example 7 (double-braided fluoropolymer assembly). | | | | |

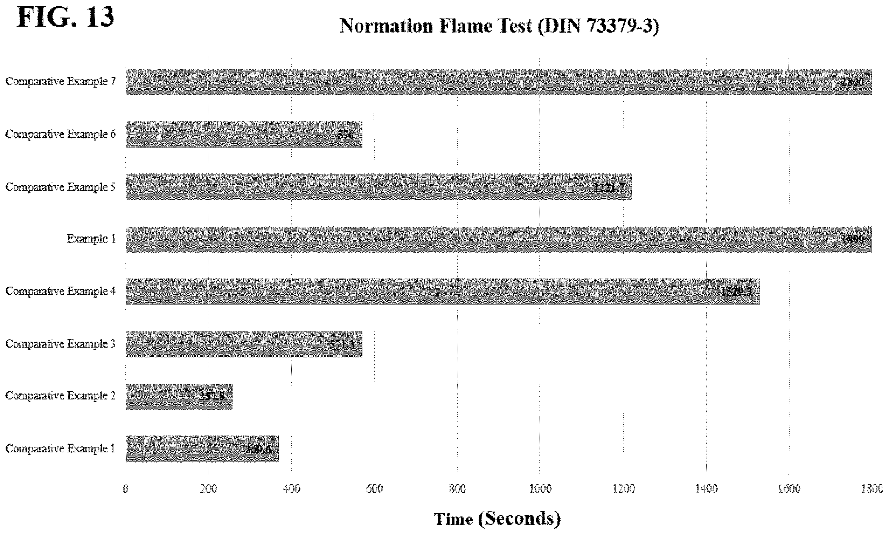

Referring now to Table 1 above and Figure 13, and paying particular attention to the DIN 73379-3 test results, the hose assembly of Example 1 outperforms the hose assemblies of Comparative Examples 1-6, but not Comparative Example 7. That said, the hose assembly of Comparative Example 7 is structurally different than the hose assembly of Example 1 in that it includes not one, but two, additional reinforcing layers comprising glass fibers. It is surprising and unexpected that the hose assembly of Example 1 does not fail and exhibits performance equal to that of the bulkier, heavier, physically restrictive reinforced hose assembly of Comparative Example 7.

Still referring to Table 1 above and Figure 13, the hose assembly of Example 1 outlasts the hose assemblies of Comparative Examples 1 and 2. The hose assemblies of Comparative Example 1 has a flame resistant layer comprising a standard TPV, while the hose assembly of Comparative Example 2 has a flame resistant layer comprising a TPV that is marked as flame resistant according to UL94-V0. Further, the hose assembly of Example 1 outlasts the hose assemblies of Comparative Examples 3 and 4, which comprise a flame resistant layer including TPV and expandable graphite. As such, the hose assembly of Example 1 outperforms other intumescent hose assemblies. In summary, the hose assembly of Example 1 significantly outperformed all other hose assemblies of similar structure, i.e., having a flame resistant layer tested (Comparative Examples 1-4).

In final reference to Table 1 above and Figure 13, Example 1 outlasts Comparative Examples 5 and 6. The hose assembly of Comparative Example 5 has a physically restrictive flame-resistant coating disposed on its outer peripheral surface. The flame-resistant coating of Comparative Example 5 is thin and not durable, and when damaged, abraded, or rubbed off results in poor surface coverage and thus weak spots against flame. Nonetheless, the hose assembly of Example 1 outlasts and is physically advantageous over the hose assembly of Comparative Example 5. The hose assembly of Example 1 also outperformed the hose assembly of Comparative Example 6 which has a fluoropolymer flame resistant layer.

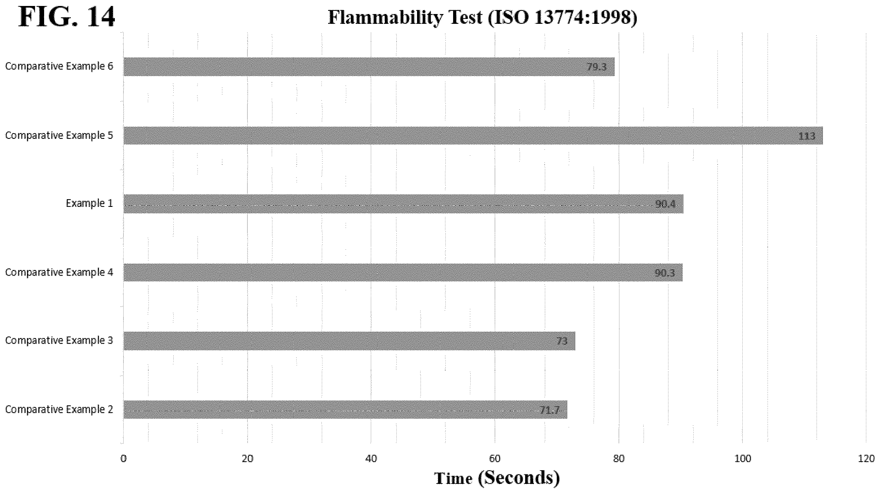

Referring now to Table 1 above and Figure 14, and paying particular attention to the ISO 13774:1998 test results, the hose assembly of Example 1 outperforms the hose assemblies of Comparative Examples 2, 3, 4, and 6, but not Comparative Example 5. That said, the hose assembly of Example 1 significantly outperformed the hose assembly of Comparative Example 2 with a similar structure as well as the intumescent hose assemblies of Comparative Examples 3 and 4.

As observed, the burn through resistance of the hose assembly of Example 1 is relatively good against the gas burner flame of test methods of DIN 73379-3 and the heptane fire of ISO 13774:1998 because:
- a char layer is formed on and within the flame resistant layer in the flames;
- the char layer of low density increases the thickness flame resistant layer and acts as an insulator;
- the char/flame resistant layer foams and increases in size but does not worm or drip; and
- the char/flame resistant layer maintains a closed surface/coverage of the inner tubular layer which reduces the further oxygen access (this was much worse with the Comparative Examples that included expandable graphite).

Example 1 passes UL94-V0, the flame stops in UL94-testing (the layer is self-extinguishing). The excellent performance of Example 1 is not only chemical but mechanical in nature in that Example 1 does not just exhibit "burn resistance", i.e. does not burn easily, but it prevents "burn through" with the char armor and swelling of the flame resistant layer via char which results in increased thickness/volume and decreased density. It was also noted, that the thickness of the flame resistant layer was sufficiently thick such that, even if locally rubbed away, for example by abrasion of the flame resistant layer on a sharp metal edge, the flame resistant layer would still be thick enough to expand and is thus robust or durable. The disclosure has been described in an illustrative manner, and it is to be understood that the terminology which has been used is intended to be in the nature of words of description rather than of limitation. Many modifications and variations of the present disclosure are possible in light of the above teachings, and the disclosure may be practiced otherwise than as specifically described.

It is to be understood that the appended claims are not limited to express any particular compounds, compositions, or methods described in the detailed description, which may vary between particular embodiments, which fall within the scope of the appended claims. With respect to any Markush groups relied upon herein for describing particular elements or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the instant disclosure independently and collectively fall within the scope of the appended claims, and are understood to describe and contemplate all ranges including whole and/or fractional values therein, even if such values are not expressly written herein.

## Claims

1. A flame resistant hose assembly comprising:
a tubular inner layer having an interior radial surface and an exterior radial surface with said tubular inner layer defining a longitudinal axis,
a flame resistant layer disposed about and covering said exterior radial surface, said flame resistant layer formed from a flame resistant material comprising:
a polymeric binder; and
an expandable flame resistant composition comprising ammonium polyphosphate in an amount of from about 10 to about 60 parts by weight based on 100 parts by weight of said flame resistant material;
wherein said flame resistant layer expands when heated to a temperature of about 230°C or greater and maintains a post-expansion coverage of said exterior radial surface of said tubular inner layer of greater than about 95%.

2. A flame resistant hose assembly as set forth in claim 1 wherein said flame resistant layer has a volumetric expansion of from about 25 to about 300% when heated to a temperature of about 230°C or greater or said flame resistant layer expands to a post expansion thickness at least two times greater than a pre-expansion thickness when heated to a temperature of about 230°C or greater.

3. A flame resistant hose assembly as set forth in claim 1 wherein said flame resistant layer maintains a post-expansion coverage of said exterior radial surface of said tubular inner layer of greater than about 99%.

4. A flame resistant hose assembly as set forth in claim 1 wherein said expandable flame resistant composition is present in an amount of from about 20 to about 45 parts by weight based on 100 parts by weight of said flame resistant material.

5. A flame resistant hose assembly as set forth in claim 1 wherein said ammonium polyphosphate decomposes at a temperature of greater than about 250°C.

6. A flame resistant hose assembly as set forth in claim 1 wherein said ammonium polyphosphate is branched.

7. A flame resistant hose assembly as set forth in claim 6 wherein said ammonium polyphosphate has a degree of polymerization of greater than about 1,000 and less than about 5,000.

8. A flame resistant hose assembly as set forth in claim 1 wherein said ammonium polyphosphate is a crystal phase II ammonium polyphosphate or a crystal phase V ammonium polyphosphate.

9. A flame resistant hose assembly as set forth in claim 1 wherein said expandable flame resistant composition further comprises: a carbohydrate; and/or a polyhydric alcohol selected from pentaerythritol, xylitol, and mannitol; and/or melamine.

10. A flame resistant hose assembly as set forth in claim 1 wherein said polymeric binder comprises a thermoplastic vulcanizate.

11. A flame resistant hose assembly as set forth in claim 1 further comprising one or more additional layers selected from: a second flame resistant layer; a reinforcing layer comprising reinforcing fibers; an elastomeric layer; and an anti-permeation layer.

12. A flame resistant hose assembly as set forth in claim 1 wherein a melting temperature of the flame resistant material is from about 180 to about 300°C.

13. A method of manufacturing a flame resistant hose assembly for use in motor vehicles comprising a polymeric tubular inner layer having an interior radial surface and an exterior radial surface with the tubular inner layer defining a longitudinal axis and a flame resistant layer disposed about the exterior radial surface, said method comprising the steps of:
extruding the tubular inner layer; and
co-extruding a flame resistant material to cover the exterior radial surface of the polymeric tubular inner layer, the flame resistant material comprising a polymeric binder and an expandable flame resistant composition comprising ammonium polyphosphate in an amount of from about 10 to about 60 parts by weight based on 100 parts by weight of the flame resistant material at a temperature of less than about 230°C to form the flame resistant layer;
wherein the flame resistant layer of the flame resistant hose assembly expands when heated to a temperature of about 230°C or greater and maintains a post-expansion coverage of the exterior radial surface of the tubular inner layer of greater than about 95%.

14. A method as set forth in claim 13 wherein the flame resistant material not expanded during co-extrusion.

15. A method as set forth in claim 13 wherein said flame resistant hose assembly is heated and formed to a desired shape.
